**Europäisches Patentamt**

**European Patent Office**

**Office européen des brevets**

(19)

(11) Veröffentlichungsnummer : **0 309 490 B1**

## (12) EUROPÄISCHE PATENTSCHRIFT

(45) Veröffentlichungstag der Patentschrift :
**20.05.92 Patentblatt 92/21**

(21) Anmeldenummer : **88900211.9**

(22) Anmeldetag : **24.11.87**

(86) Internationale Anmeldenummer :
**PCT/AT87/00069**

(87) Internationale Veröffentlichungsnummer :
**WO 88/07432 06.10.88 Gazette 88/22**

(51) Int. Cl.⁵ : **B23P 6/00,** B60B 3/04,
B23K 9/02, B23K 37/04

(54) **VERFAHRENSVERBESSERUNG DER FELGENREPARATUR VON MISSGEBILDETEN AUTORADDURCHBOHRUNGEN.**

(30) Priorität : **01.04.87 YU 56587/87**

(43) Veröffentlichungstag der Anmeldung :
**05.04.89 Patentblatt 89/14**

(45) Bekanntmachung des Hinweises auf die
Patenterteilung :
**20.05.92 Patentblatt 92/21**

(84) Benannte Vertragsstaaten :
**AT BE CH DE FR GB IT LI LU NL SE**

(56) Entgegenhaltungen :
**DE-C- 801 007**
**GB-A- 1 359 098**
**US-A- 1 550 651**
**US-A- 4 080 705**

(56) Entgegenhaltungen :
**Technische Rundschau, Vol. 65, No. 37, 04
September 1973, N.F. Eaton et al.:
"Behälterschweissen. AutomatischesUnterpulverfahren für Stutzen", page 7**

(73) Patentinhaber : **Markelj, Zlatko**
**Kaiser Franz Ring 37**
**A-2500 Baden (AT)**

(72) Erfinder : **Markelj, Zlatko**
**Kaiser Franz Ring 37**
**A-2500 Baden (AT)**

(74) Vertreter : **Collin, Hans, Dipl.-Ing. Dr. et al**
**Patentanwälte Dipl.-Ing. Dr. Hans Collin**
**Dipl.-Ing. Erwin Buresch Dipl.-Ing. Dr. Helmut**
**Wildhack Dipl.-Ing. Armin HäuplMariahilfer**
**Strasse 50**
**A-1070 Wien (AT)**

## Beschreibung

Die Erfindung betrifft ein Verfahren zur Reparatur von Rad-Felgen mit verformten Befestigungsbohrungen (Siehe z.B. YU-A-322/85) Der Gegenstand der Erfindung gehört zum Bereich des allgemeinen Maschinenbaues, speziell zum Gebiet der Formbearbeitung durch Zerspanung und Schleifen sowie durch die Verbindung von Metallen mittels Schweißen u.zw. am Bearbeitungsgebiet von Platten-Stahlelementen.

TECHNISCHES PROBLEM

Das gemäß der Erfindung zu lösende technische Problem besteht in folgendem:

Die Art und Weise, daß eine gleichmäßig kompakte Schweißung des gesamten Kreisprofilrandes des neuen ebenen tellerförmigen Felgeninnenteils ermöglicht wird, wobei der geschweißte, befestigte Teil so wenig wie möglich konvex verformt wird, damit möglichst wenige Späne von den Flächen - im Laufe von drei Bearbeitungen, durch planmäßiges Schleifen vor dem gleichzeitigen Durchbohren der Befestigungslöcher mit einer Mehrspindelbohrmaschine - abgestreift werden.

Das festgelegte technische Problem wird durch die Verfahrensschritte und -merkmale des Patentanspruchs 1 erfindungsgemäß gelöst.

TECHNISCHE LAGE

Beim Verfahren der Felgenreparatur gemäß der Beschreibung der Patentanmeldung YU-A-322/85 wird die Entfernung des ebenen Teiles bzw. Abschnittes des tellerartigen Felgeninnenteils mit Hilfe eines entlang einer Kreislinie geführten Gasbrenners an den Befestigungsbohrungen der Felge vorgesehen.

Um eine möglichst regelmäßige Form der Kreisschnittlinien zu erhalten, werden die Befestigungsbohrungen auf dem ebenen Teil des tellerartigen Felgeninnenteils vorher mit Lichtbogenschweißungen gefüllt. Nach vollendetem Schnitt durch einen Gasbrenner wird der Schnittrand über den ganzen Umfang beiderseitig schleifend konisch geformt. In die derart bearbeitete runde Öffnung des tellerartigen Felgeninnenteils wird eine vorher gedrehte Metallplatte eingebracht und zentriert (ausgerichtet). Der Rand dieser Platte ist über den ganzen Umfang konisch geschliffen. Danach wird die Metallplatte durch Lichtbogenschweißung an dem tellerartigen Felgeninnenteil befestigt. Schweißnahtüberschuß wird von der geraden Fläche des ebenen Teiles - beiderseitig des tellerartigen Felgeninnenteils - weggeschliffen.

Der durch die Lichtbogenschweißung konvex deformierte Kranzabschnitt des Felgeninnenteils wird durch schwere Rammbärstöße geebnet. Dabei soll die zu ebnende Fläche durch eine geraderichtende Leiter ständig kontrolliert werden.

Danach folgt die Herstellung neuer Befestigungsbohrungen mit beiderseitiger konischer Ausbildung derselben unter entsprechendem Winkel, wobei jede Bohrung separat ausgeführt wird.

Zum Bohren verwendet man eine Schablone, welche - abhängig von der Felge - sechs, acht oder zehn regelmäßig längs eines Kreises angeordnete Öffnungen hat.

Bei diesem Verfahren ist es möglich, eine Felge mit verformten Befestigungsbohrungen maximal zweimal zu reparieren, falls keine anderen Beschädigungen vorhanden sind.

Gemäß dem Verfahren, welches in der Zusatzanmeldung YU-A-1550/85 beschrieben ist, werden noch drei weitere mögliche Felgenreparaturen vorgesehen. Dies sollte derart erfolgen, daß die verformten Befestigungsbohrungen mit Lichtbogenschweißungen gefüllt und zwischen den genannten Bohrungenlaut vorerwähntem Verfahren - die neuen Befestigungsbohrungen ausgeführt werden.

Demzufolge wäre die erste, dritte und fünfte Reparatur nach dem Verfahren gemäß der Zusatzanmeldung durchzuführen; bei der zweiten und vierten Reparatur sollte das Verfahren gemäß der Basisanmeldung angewendet werden.

Eine nach dem Verfahren gemäß der Zusatzanmeldung YU-A-1550/85 reparierte Felge erwies sich im Laufe der Nutzung als ungeeignet, da neue Löcher am ebenen Teil des tellerartigen Felgeninnenteils um die - durch Schweißung geschlossenen - Befestigungsbohrungen entstanden. Dies deshalb, weil zwischen der verformten Befestigungsbohrung und dem naheliegenden ebenen Teil des tellerartigen Felgeninnenteils nach der Abkühlung der Schweißverbindung eine Zugvorspannung entstand. In Anbetracht der Werkstoff-Verschiedenheit der Einlage, des Felgeninnenteils und der Elektrode, sowie infolge dynamischer Belastung, entstanden rasch Löcher, wovon einige sich auf dem Rundteil des Felgeninnenteils radial in Richtung Felgenaußenteil bzw. Reifenbett verbreiteten.

Bei der Durchführung der Felgenreparatur nach dem Verfahren gemäß der Basisanmeldung YU-A-322/85 mußte ganz besonders das Schleifen des Umfangsrandes - nach Entfernung des Kranzes - um die verformten Befestigungsbohrungen beachtet werden, da beim Handschleifen eine gleichmäßige, reguläre, beiderseitig konisch bearbeitete Rundfläche schwer erzielbar ist.

Wegen der Unregelmäßigkeiten des konischen Randes ist es nicht möglich, die Schweißung mit gleichmäßiger Geschwindigkeit durchzuführen.

Deswegen halten die Schweißungen auf mehr geschliffenen Umfangs-Randteilen etwas länger, demzufolge ist der Felgeninnenteil auf diesen Stellen der Glühung mehr ausgesetzt, wodurch als Resultat nach der Abkühlung die Entstehung unterschiedlicher radialer Vorspannungen ist.

Ebenso ist es nicht möglich, durch schwere Rammbärstöße von Hand aus den durch die Lichtbogenschweißung konvex verformten Kranz ganz auszurichten.

Demzufolge kommt es bei der Herstellung der Befestigungsbohrungen zu Abweichungen in Axialrichtung von der fast idealen Rotationsfläche des ebenen Teiles des tellerartigen Felgeninnenteils.

Eine derart reparierte Felge, obwohl im Betrieb (bei der Nutzung) sicher, bewirkt Querschwingungen des Rades, wodurch sich die Verformung der Rotationsfläche des ebenen Teiles des tellerartigen Felgenteils bei schweren dynamischen Spannungen verstärkt und auf die ganze Konstruktion der Rad-Felgeninnenteilaufhängung negativ einwirken kann.

Die oben angeführten Mängel sind die Grundmängel der bereits bekannten (verschiedenen) Felgen-Reparaturverfahren für Autoräder. Aufgrund der vorliegenden Erfindung besteht das Ziel für eine Lösung darin, daß der zentrale Kranzteil auf dem tellerartigen Felgeninnenteil durch Schweißung befestigt wird.

Die Schweißnaht muß über den ganzen Umfang gleichmäßig kompakt sein, wobei die Zugvorspannung nach der Abkühlung radial gleichmäßig und die konvexe Verformung des geschweißten Kranzteiles gering werden, was eine präzisere Ausarbeitung der Flächen des tellerartigen Felgeninnenteils durch planmäßiges Schleifen ermöglicht.

## BESCHREIBUNG DES VERFAHRENS

Gemäß dem erfindungsgemäßen Verfahren zur Reparatur von Rad-Felgen ist die Entfernung des zentralen Kranzteiles durch eine Drehbank vorgesehen.

Nach Entfernung des Kranzteiles - ohne Abnahme der auf der Drehbank befestigten Felge - wird beim Drehen der Rand beiderseitig des entstandenen Loches bearbeitet.

Eine neue Rundscheibe mit Rundöffnung in der Mitte wird auf der Drehbank befestigt, der Umfangsrand wird beiderseitig konisch durch Drehen bearbeitet.

Die durch das Drehen bearbeitete Felge und die Rundplatte werden in eine Klemme gestellt und der Verbindungsvorgang durch Lichtbogenschweißung in einer Kohlensäure-Schutzatmosphäre beginnt.

Nach der Abkühlung wird der Überschuß der Schweißnaht durch Grobschleifen entfernt.

Danach beginnt man mit dem Einebnen der geschweißten Scheibe durch beiderseitiges planmäßiges Schleifen.

Die Felge wird wieder auf die Drehbank gesetzt, nun wird die zentrale Öffnung des ebenen Teiles des tellerartigen Felgeninnenteils durch Drehen bearbeitet.

Alle Befestigungsbohrungen (zur Befestigung der Felge an der Radnabe) werden gleichzeitig gebohrt, mit einseitigem konischen Ausreiben, u.zw. durch eine fixierte Bohrmaschine. Dabei ist die Felge an der angeführten Klemme befestigt. Genannte Klemme wird am Gestell einer Mehrspindelmaschine zentriert und fixiert.

Danach wird das Gestell mit der Felge umgewendet (umgesteuert), damit die Bohrungen auch auf der anderen Seite ausgerieben werden können.

Das soeben erläuterte Reparaturverfahren ermöglicht, daß durch präzise Bearbeitung an der Drehmaschine des Randes der Rundöffnung des ebenen Teiles des tellerartigen Felgeninnenteils und des Umfangsrandes der Kreisplatte, sowie durch Zentrieren in der Klemme, querschnittlich über den ganzen Umfang, gleichmäßige x-förmige Ränder entstehen. Die Geschwindigkeit des Schweißkopf-Vorschubs ist gleichmäßig, so daß die Schweißnaht über den ganzen Umfang einen gleichmäßigen Querschnitt erhält.

Dadurch sind die Zugspannungen im Werkstoff über den ganzen Umfang in radialer Richtung gleichmäßig verteilt.

Bei Anwendung von Kohlensäure-Schutzatmosphäre beim Schweißen wird die auf den Felgeninnenteil und auf die Kreisplatte übertragene Wärmemenge vermindert. Demzufolge wird auch die konvexe Verformung der geschweißten Scheibe auf ein Minimum reduziert.

Durch planmäßiges Schleifen wird die Fläche beiderseitig präzise geebnet. Es entstehen zwei Parallelflächen mit Rotationsebenen, so daß keine auf die Radnaben-Aufhängung ungünstig einwirkenden Querschwingungen entstehen.

Beim gleichzeitigen Bohren aller Befestigungslöcher werden dieselben präzise zentriert, bei der Nutzung ist das Resultat eine günstigere Radbalancierung.

Dies wären die grundsätzlichen Vorteile des erfindungsgemäßen Verfahrens.

Ebenso ist ein wichtiger Vorteil dieses Verfahrens, daß die Reparatur - mit Bezug auf die präzise Drehbank-Bearbeitung des Randes des ebenen Teiles des tellerartigen Felgeninnenteils - drei- bis fünfmal auf einer Felge erfolgen kann. Das verlängert die zeitliche Verwendungsmöglichkeit der Felge, sowie die Gebrauchsdauer des gesamten Fahrzeugs.

Das erfindungsgemäße Reparaturverfahren wird nun an Hand von Ausführungsbeispielen und unter Bezugnahme auf die beiliegenden Zeichnungen näher erläutert.

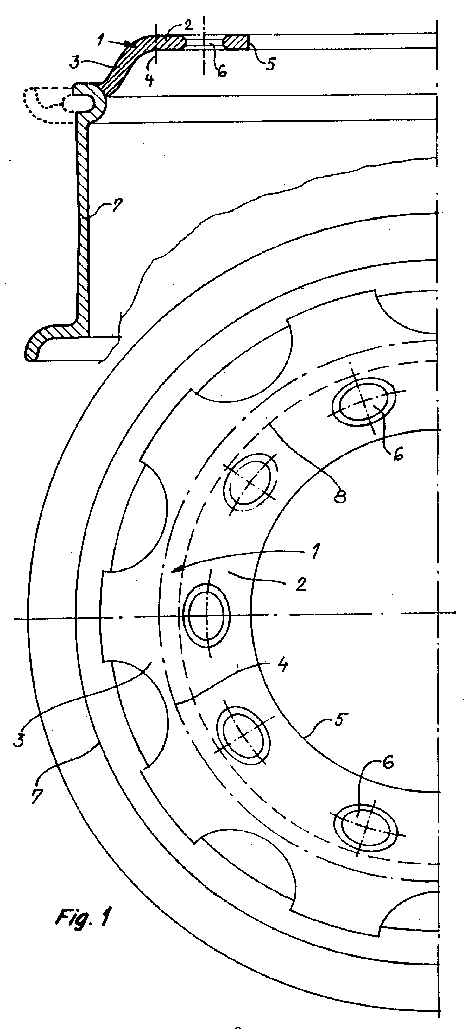

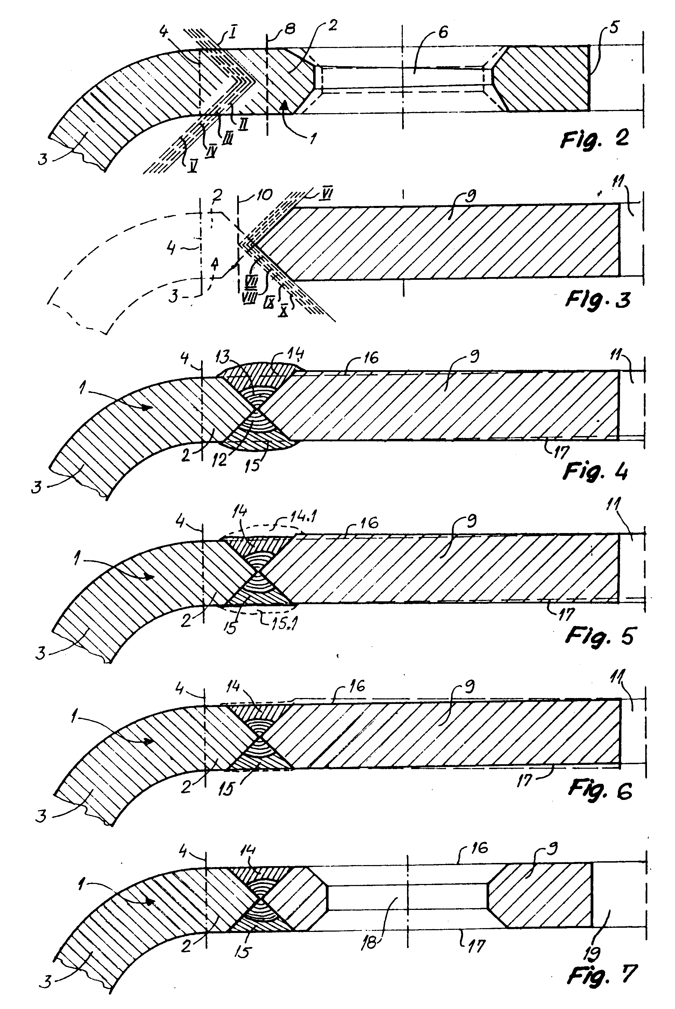

Fig. 1 zeigt im Querschnitt und in der Ansicht von oben die Felge mit den verformten Befestigungsbohrungen, Fig. 2-7 zeigen die einzelnen Reparatur-Phasen beim Austausch des ebenen Ringteiles des tellerartigen Felgeninnenteils.

Der tellerartige Felgeninnenteil 1 besteht aus einem ebenen Teil 2 und einem gewölbten konischen Teil 3.

Der ebene, ringförmige Teil 2 des tellerartigen Felgeninnenteils wird durch die Linie 4 und den Rand 5 der Mittelöffnung der Felge begrenzt.

Durch die Mitte des ringförmigen Teiles 2 des Felgeninnenteils 1 sind in gleichmäßigen Kreisbogen-Strecken Durchbohrungen (beiderseitig konisch eingelassen) vorgesehen, um die Felge auf der Radnabe des Fahrzeuges befestigen zu können. Die Zahl dieser Befestigungsbohrungen, sechs, acht oder zehn, wird nach der Type des einzelnen Fahrzeuges bzw. der Nutzlast und Anwendung desselben festgesetzt. Es gibt auch Felgen mit einer größeren Zahl von Befestigungsbohrungen, dieselben sind für Spezialfahrzeuge bestimmt.

In der Fig. 1 ist eine Felge mit zehn Befestigungsbohrungen 6 dargestellt.

Im Laufe des Gebrauches (der Nutzung) infolge - durch Unebenheiten der Fahrbahn hervorgerufener - dynamischer Belastungen verformen sich die Befestigungsbohrungen 6 elliptisch, wobei auch die konischen Flächen dieser elliptisch verformten Bohrungen 6 verformt werden.

Um eine Felge in ihren normalen, ordnungsgemäßen Zustand zurückzubringen, ist es nötig, eine Reparatur vorzunehmen.

Vorerst wird auf der Felge mit den verformten Befestigungsbohrungen 6 mit einem Gasbrenner entlang der Kreislinie 8 - direkt an der Außenseite der verformten Bohrungen - der Ringteil 2 des tellerartigen Felgeninnenteils entfernt.

Danach wird die Felge durch die innere Umfangsfläche des Reifenbetts 7 zentriert und am Spannkopf der Drehbank befestigt.

Der übriggebliebene Teil des ebenen Teiles 2 der Felge wird gemäß der strichlierten Querschnitt-Linie I konisch gedreht, wie aus Fig. 2 ersichtlich ist.

Beiderseitige konische Dreh-Bearbeitung gemäß den strichlierten Linien II, III, IV und V in Fig. 2 ist für spätere Felgenreparaturen vorgesehen.

Hinter der Kreislinie 4 beginnt der gewölbte Teil 3 des tellerartigen Felgeninnenteils 1; an diesem Teil wird keine Dreh- oder andersartige Bearbeitung vorgenommen.

Auf einer Metallplatte 9 (stärker als der ebene Teil 2 des tellerartigen Felgeninnenteils 1), welche vorher kreisähnlich nach der mit 10 bezeichneten Linie ausgeschnitten wird, wird zuerst in der Mitte mit dem Gasbrenner eine Öffnung 11 gefertigt. Diese Öffnung 11 hat einen viel kleineren Durchmesser als die entsprechende Öffnung an der ursprünglichen Felge.

Diese Platte 9 mit grob bearbeiteten Rändern und mit der zentralen Öffnung 11 wird auf den Drehbankkopf gesetzt. Dabei (beim Einstellen und Festziehen) soll darauf geachtet werden, daß die Platte 9 mit ihrer Fläche fest auf die Stirnscheiben der radialen Schubklemmelemente des Drehbankkopfes angedrückt wird.

Danach wird der Außenrand der Platte 9 beiderseitig konisch gemäß der Querschnittlinie VI in Fig. 3 drehbearbeitet.

Gemäß den strichlierten Querschnittlinien VII, VIII, IX und X wird eine Bearbeitung des konischen Randes der Platte 9 für die nächste Reparatur auf der Drehbank vorgesehen.

Der Drehdurchmesser des Außenumfanges des bearbeiteten Randes der Platte 9 darf 0,2 mm und maximal 0,4 mm kleiner sein als der Durchmesser des inneren drehbearbeiteten Randes des verbliebenen Abschnittes des ebenen Teils 2 des tellerartigen Felgeninnenteils 1.

Das beiderseitige Drehverfahren am ringförmigen Teil 2 und an der Platte 9 wird in einem 45°-Winkel durchgeführt.

In der zweiten Bearbeitungsphase wird die Felge mit dem drehbearbeiteten Rand - wo der entfernte Teil des tellerartigen Felgeninnenteils 1 war - auf ihrer konvexen Seite auf ein Rotationsgestell zur Zentrierung, Verspannung und Schwenkung der zu bearbeitenden Felge gesetzt. Dieses Gestell weist in der Mitte eine höhenverstellbare Zentralplatte, auf die die Platte 9 gesetzt wird, auf.

Die Zentralplatte des Gestells wird auf die Hälfte der Stärkedifferenz zwischen der Wand des tellerartigen Felgeninnenteils 1 und der Stärke der Platte 9 gesetzt, damit die drehbearbeiteten Spitzränder genau gegenüberliegen.

Die Platte 9 wird visuell zentriert und mit Zwingen auf der eingelassenen Gestell-Zentralplatte befestigt. Ebenso wird die Felgenlage auf dem Gestell festgesetzt.

Danach erfolgt die Fertigung der Schweißwurzel 12 auf der Felgen-Innenseite.

Nach der Fertigung der Schweißwurzel 12 wird die Felge auf die andere Seite gedreht und die Schweißwurzel 13 auf der Felgen-Außenseite gefertigt.

Danach wird die Fertigschweißnaht 14 über der Schweißwurzel 13 gefertigt.

Die Felge wird mit ihrem konvexen Teil wieder nach unten gedreht, über der Schweißwurzel 12 wird die Fertigschweißnaht 15 gefertigt.

Gleich nach beendeter Schweißung der Schweißwurzel 12 und des Felgen-Innenteiles ist es nicht nötig, zur Fertigung der übrigen Schweißungen 13,14 und 15 die Platte 9 zu spannen; nur durch Zentrieren derselben wird die Felgenlage festgesetzt, da die Schweißung mechanisch durch Führung des Elektrodenhalters an der regelmäßigen Kreislinie erfolgt.

Die Schweißung erfolgt in einer $CO_2$-Atmosphäre mit Draht-Elektroden DRM 1,2 mm, wobei die Schweißwurzeln 12 und 13 bei 120 - 140 A Strom durchgeführt werden und für die Fertigschweißnähte 14 und 15 Strom mit 170 - 220 A benötigt wird.

Da bei Abkühlung der Schweißnähte sich in der Werkstoffstruktur des tellerartigen Felgeninnenteils 1 und der Platte 9 Vorspannungen gebildet haben, biegt sich die Fläche der Platte 9 etwas in Richtung des Inneren der Felge und entfernt sich von der idealen, in der Fig. 4 mit 16 und 17 bezeichneten Parallelfläche, wo die beiderseitigen Flächen des ebenen Teiles 2 des tellerartigen Felgeninnenteils 1 liegen.

Bei der nächsten, dritten Reparaturphase, die aus der Fig. 5 ersichtlich ist, werden mit grobem Handschliff die Überreste 14.1 und 15.1 der Fertigschweißnähte 14 und 15 entfernt.

Die Platte 9 wird mit einer Stoßspindelpresse teilweise eingeebnet.

Die Einebnung ist nur im Falle größerer Verformungen oder konkaver Einsenkungen der Platte 9 nach Abkühlung der geschweißten Verbindung des verbliebenen Teiles des ebenen, ringförmigen Teiles 2 des tellerartigen Felgeninnenteils 1 und der neuen Platte 9 notwendig.

Bei der nächsten, vierten Reparaturphase werden die Flächen des ebenen Teiles 2 des tellerartigen Felgeninnenteils planmäßig derart geschliffen, daß diese zu Parallelflächen 16 und 17 werden und den Felgen-Rotationsflächen - wie in Fig. 6 gezeigt - entsprechen.

In Fig. 7 ist eine durch Endreparatur bearbeitete Felge dargestellt. In der Endphase werden gleichzeitig alle Bohrungen 18 auf einmal mit einem Mehrspindelbohrer hergestellt.

Die konische Ausbildung der Ränder der Bohrung 18 erfolgt zuerst auf der Außenseite, danach auf der Innenseite der Felge. Bei der Herstellung der Befestigungsbohrungen und der konischen Ausbildung der Ränder derselben muß die Felge auf dem Gestell - bei entfernter Höhenverstellplatte präzise zentriert und eingespannt werden. Über dem Gestell stehen zentrische Kerben des Bohrständers.

Nach Fertigung der Befestigungsbohrungen 18 wird die Felge mit ihrem Reifenbett 7 auf den Klemmkopf der Drehbank gelegt.

Damit wird auf der Platte 9 bzw. auf dem ebenen Teil des reparierten tellerartigen Felgeninnenteils 1 die zentrale grobausgeschnittene Öffnung 11 durch Drehen auf den Durchmesser der - in Fig. 7 unter Position 19 - angeführten Rundöffnung zurückgeführt, was dem Durchmesser der Öffnung der ursprünglichen Felge entspricht.

Die in beschriebener Weise gemäß dieser Erfindung reparierte Felge entspricht in Form und Qualität gänzlich der ursprünglichen Felge und ist als solche für den Gebrauch geeignet. Um eine solche reparierte Felge zu schützen, wird es notwendig sein, dieselbe mit antikorrosiver Grundfarbe und einem End-Spezialanstrich für Felgen zu bestreichen.

## Patentansprüche

1. Verfahren zur Reparatur von Rad-Felgen mit verformten Befestigungsbohrungen, gekennzeichnet durch folgende Schritte:

auf der Außenseite der verformten Befestigungsbohrungen (6) wird entlang einer Kreislinie (8) mit einem Gasbrenner der innere Abschnitt des ebenen Teiles (2) des tellerartigen Felgeninnenteils (1) unmittelbar ausgeschnitten und entfernt;

die Felge wird an ihrem Felgenaußenteil bzw. Reifenbett (7) zentriert und auf einer Drehbank befestigt;

der verbliebene Abschnitt des ebenen Teiles (2) des tellerartigen Felgeninnenteils (1) wird gemäß der Querschnittlinie 1 beiderseitig konisch gedreht;

die Felge mit ihrem bearbeiteten Rand wird mit ihrer konvexen Seite gemäß einer Querschnittlinie I angeordnet und auf einem Rotationsgestell zur Zentrierung, Verspannung und Schwenkung der zu bearbeitenden Felge, das eine höhenverstellbare Zentralplatte aufweist, befestigt, eine Platte (9) mit durch Drehen beiderseitig konisch bearbeitetem Außenrand wird gemäß einer gegenüberliegenden Querschnittlinie VI so auf der höhenverstellbaren Zentralplatte befestigt, daß die Ränder der Platte (9) und des ebenen Teiles (2) in derselben Ebene liegen;

die Verschweißung der Verbindung erfolgt durch eine Schweißwurzel (12) an der Felgeninnenseite, danach durch eine Schweißwurzel (13) an der Felgenaußenseite;

danach folgen die außenseitige Fertigschweißnaht (14) und die innenseitige Fertigschweißnaht (15);

die Ränder (14.1, 15.1) der Fertigschweißnähte (14,15) werden grob geschliffen und die Flächen des ebenen Teiles (2) mit der angeschweißten Platte (9) werden durch planmäßiges Schleifen gänzlich zu Parallelflächen (17,16) geebnet;

auf dem ebenen Teil (2) des tellerartigen Felgeninnenteils (1) werden an der oberflächenbearbeiteten Platte (9) gleichzeitig mittels eines Mehrspindelbohrers Befestigungsbohrungen (18) ausgeführt;

danach wird die Felge wieder mit ihrem Reifenbett (7) am Drehbankkopf befestigt und es wird durch Drehen die zentrale Kreisöffnung (19) zur Lochgröße der ursprünglichen Felge bearbeitet.

2. Verfahren nach Anspruch 1, gekennzeichnet durch folgende weitere Schritte:

für jede nachfolgende Reparatur wird der ebene Teil (2) des tellerartigen Felgeninnenteils (1) im Drehverfahren entlang der mit II, III, IV und V bezeichneten Querschnittlinien weiterbearbeitet;

der äußere Umfang der Platte (9) wird auf der Drehbank gemäß den strichlierten Querschnittlinien VII, VIII, IX und X bearbeitet, wobei diese Querschnittlinien von I bis X unter einem 45°-Winkel ausgeführt werden.

3. Verfahren nach den Ansprüchen 1 und 2, dadurch gekennzeichnet, daß die Bearbeitung der Platte (9) vor der Randumfangbearbeitung im Drehverfahren vorgesehen wird und daß die Platte (9) am Rand mit einem Gasbrenner gemäß einer Kreislinie (10) ausgeschnitten wird und die zentrale Rundöffnung (11) ebenso mit Gasbrenner auf einen geringeren Durchmesser als die Öffnung der ursprünglichen Felge ausgeführt wird.

4. Verfahren nach Anspruch 1, dadurch gekennzeichnet, daß die Schweißverbindungen des verbliebenen Abschnittes des ebenen Teiles (2) des tellerartigen Felgeninnenteils (1) und der Platte (9) mit einem Schweißdraht von 1,2 mm Durchmesser in einer $CO_2$-Atmosphäre durchgeführt werden, wobei ein Strom von 120 bis 140 A für die Schweißwurzeln (12,13) und ein Strom von 170 bis 220 A für die Fertigschweißnähte (14,15) benötigt wird.

## Claims

1. Process for repairing wheel rims with mis-shapen fastening drillings, characterized by the following steps:

on the outside of the mis-shapen fastening drillings (6) the inner portion of the plane part (2) of the plate-shaped inner part (1) of the rim is immediately cut out along a cirucular line (8) by means of a gas burner and is removed;

the rim is centered at its outer part or tire bed (7) and mounted on a turning lathe;

the remaining portion of the plane part (2) of the plate-shaped inner part (1) of the rim is conically machined on the lathe on both sides according to cross-sectional line I;

the rim with its machined edge is arranged with its convex side according to a cross-sectional line I and secured to a rotary frame for centering, bracing and swinging of the rim to be machined, which frame is provided with a center plate adjustable in height, a plate (9) with an outer edge conically machined on both sides by means of turning is secured to the height-adjustable center plate according to an opposite cross-sectional line VI in such a way that the edges of plate (9) and of plane part (2) are in the same plane;

welding of the junction is done by a welding root (12) on the inside of the rim, then by a welding root (13) on the outside of the rim;

this is followed by the finishing weld seam (14) on the outside and the finishing weld seam (15) on the inside;

edges (14.1, 15.1) of the finishing weld seams (14, 15) are rough ground and the surfaces of plane part (2) with plate (9) welded to it, are completely flattened to parallel surfaces (17, 16) by planar grinding;

fastening drillings (18) are simultaneously carried out by means of a multispindle drill in the surface-machined plate (9) on the plane part (2) of the plate-shaped inner part (1) of the rim;

after this, the rim is again mounted on the turning lathe head with its tire bed (7), and central cirular opening (19) is machined by turning until it has reached the hole size of the original rim.

2. Process according to claim 1, characterized by the following further steps:

for each following repair, plane part (2) of plate-shaped inner part (1) of the rim is further machined by turning along the cross-sectional lines designated as II, III, IV and V;

the outer periphery of plate (9) is machined on the turning lathe according to broken cross-sectional lines VII, VIII, IX, and X, these cross-sectional lines being carried out from I to X at an angle of 45°.

3. Process according to claim 1 and claim 2, characterized in that machining of plate (9) is provided for before machining of the edge periphery in a turning process and that plate (9) is cut out at the edge by means of a gas burner according to a circular line (10) and central round opening (11) is also carried out with a gas burner to a smaller diameter than the opening of the original rim.

4. Process according to claim 1, characterized in that the welding joints of the remaining portion of plane part (2) of plate-shaped inner part (1) of the rim and plate (9) are done with a welding wire of 1.2 mm in diameter in a $CO_2$ atmosphere, a current of 120 to 140 A being necessary for the welding roots (12,13) and a current of 170 to 220 A being necessary for finishing weld seams (14,15).

**Revendications**

1. Processus de réparation de jantes avec alésages d'attache déformés, characterisé par les pas suivants:
   à la face extérieure des alésages d'attache (6) déformés, la section intérieure de la partie plane (2) de la partie intérieure (1) de jante en forme d'assiette est découpée immédiatement le long d'une ligne circulaire (8) avec un bec à gaz et elle est enlevée;
   la jante est centrée à sa partie extérieure ou plat de jante (7) et montée sur un tour;
   la section qui reste de la partie plane (2) de la partie intérieure (1) de jante en forme d'assiette est tournée coniquement des deux côtés selon la ligne de coupe transversale I;
   la jante avec son bord usiné est positionnée avec sa côté convexe selon une ligne de coupe transversale I et est montée sur un bâti de révolution pour le centrage, haubanage et pivotement de la jante à usiner, ce bâti présentant une plaque centrale apte à être déplacée en hauteur, une plaque (9), dont le bord extérieur est usiné coniquement des deux cotés par tournage, est monté sur la plaque centrale apte à être déplacée en hauteur selon une ligne de coupe tranversale VI opposée de façon que les bords de la plaque (9) et de la partie plane (2) soient situés dans un meme plan;
   le soudage du joint est effecuté en faisant une racine de soudage (12) à la face intérieure de jante, suivie d'une racine de soudage (13) à la face extérieure de jante;
   cela est suivi d'une soudure finale extérieure (14) et une soudure finale intérieure (15);
   les bords (14.1, 15.1) des soudures finales (14, 15) sont dégrossis à la meule, et les surfaces de la partie plane (2) avec la plaque (9) rapportée par soudure sont complètement aplanies par rectification plane pour devenir des surfaces parallèles (17, 16);
   sur la partie plane (2) de la partie intérieure (1) de jante en forme d'assiette, des alésages d'attache (18) sont simultanément effectués dans la plaque (9) à surface usinée au moyen d'une perceuse multibroche;
   ensuite la jante est encore montée sur la tête de tour avec son plat de jante (7) et l'ouverture circulaire centrale (19) est usinée jusqu'à la dimension de trou de la jante de départ.

2. Processus selon la revendication 1, characterisé par les pas supplémentaires suivants:
   pour chaque réparation suivante, on continue à usiner la partie plane (2) de la partie intérieure (2) de jante en forme d'asssiette par tournage le long des lignes de coupe transversale désignées par II, III, IV et V;
   le périmètre extérieur de la plaque (9) et usiné sur un tour selon les lignes de coupe transversale en trait interrompu VII, VIII, IX et X, les lignes de coupe transversale de I à X étant exécutées sous un angle de 45°.

3. Processus selon les revendications 1 et 2, characterisé en ce que l'usinage de la plaque (9) est prévu avant l'usinage du périmètre de bord par tournage et en ce que la plaque (9) est découpée au bord selon une ligne circulaire (10) avec un bec à gaz et l'ouverture ronde centrale (11) est de meme exécutée avec un bec à gaz jusqu'à un diamètre inférieur à celui de l'ouverture de la jante de départ.

4. Processus selon la revendication 1, characterisé en ce que les joints soudés de la section qui reste de la partie plane (2) de la partie intérieure (1) de jante en forme d'assiette et de la plaque (9) sont exécutés avec une baguette d'un diamètre de 1,2 mm dans une atmosphère de $CO_2$, exigant un courant de 120 à 140 A pour la racine de soudage (12, 13) et un courant de 170 à 220 A pour les soudures finales (14,15).

**Fig. 1**

Fig. 2

Fig. 3

Fig. 4

Fig. 5

Fig. 6

Fig. 7